Europäisches Patentamt

European Patent Office

Office européen des brevets

(11) Veröffentlichungsnummer: **0 307 563 B1**

(12) **EUROPÄISCHE PATENTSCHRIFT**

(45) Veröffentlichungstag der Patentschrift: **29.04.92**

(21) Anmeldenummer: **88110640.5**

(22) Anmeldetag: **04.07.88**

(51) Int. Cl.⁵: **B23B 27/16**

(54) **Schneideinsatz mit wellenförmiger Spanfläche.**

(30) Priorität: **18.09.87 DE 3731426**

(43) Veröffentlichungstag der Anmeldung:
**22.03.89 Patentblatt 89/12**

(45) Bekanntmachung des Hinweises auf die
Patenterteilung:
**29.04.92 Patentblatt 92/18**

(84) Benannte Vertragsstaaten:
**CH FR GB IT LI NL**

(56) Entgegenhaltungen:
**DE-A- 2 252 350       DE-A- 2 252 351
DE-A- 2 845 211       US-A- 3 792 515
US-A- 3 947 937       US-A- 4 059 363
US-A- 4 344 725**

(73) Patentinhaber: **Fried. Krupp Gesellschaft mit
beschränkter Haftung
Altendorfer Strasse 103
W-4300 Essen 1(DE)**

(72) Erfinder: **Von Haas, Rainer, Dipl.-Ing.
Krümmelstrasse 26
W-2054 Geesthacht(DE)**
Erfinder: **Wegener, Manfred
Johannes-Klein-Strasse 1
W-4300 Essen 14(DE)**

(74) Vertreter: **Vomberg, Friedhelm, Dipl.-Phys.
Schulstrasse 8
W-5650 Solingen 1(DE)**

**Beschreibung**

Die Erfindung betrifft einen Schneideinsatz für die spanende Bearbeitung nach dem Oberbegriff des Anspruches 1.

Ein solcher Schneideinsatz ist aus der US-A-3 792 515 bekannt, wonach die Schneidkante mit anschließendem Spanbrecher in der Ebene der Freifläche oder Seitenfläche eine aus geraden und/oder gewölbten Teilen zusammengesetzte Kurve beschreibt. Nach der DE-PS 25 44 991 ist ein Schneideinsatz mit wellenförmiger Schneidkante und mehreren wellenförmigen, terassenförmig angeordneten Spanbrecherstufen bekannt. Durch die Spanbrecherstufen sind viele und in unterschiedlichen Richtungen wirksame über die Spanbreite variierende Spanformdrücke auf den Span wirksam, so daß dieser in starker Weise kreuz und quer verformt wird, daß er schnell und kurz bricht. Durch die Anordnung der Spanbrecherstufen sind diese voneinander durch Kanten getrennt. Nach der EP-A-0 166 898 ist ein Schneideinsatz bekannt, bei dem die Schneidkante stellenweise Einbuchtungen hat. Diese Einbuchtungen bilden Kanten auf der Spanfläche und Ecken an der Schneidkante. In der DE-OS 28 40 610 wird ein Schneideinsatz beschrieben, dessen Schneidkanten durch Nuten oder Eindrückungen unterbrochen sind, die sich auf der Spanfläche erstrecken und von dem durchbrochenen Teil der Schneidkante ausgehen. Dabei wird betont, daß eine erhöhte plastische Verformung des Spans erreicht wird durch möglichst ausgeprägte Ausbildung des Überganges zwischen Spanfläche und Schneidkante bzw. der Eindrückung, d.h. durch Ausbildung der Übergangszone mit einer im wesentlichen scharfen Kante.

Bedingt durch diese Kanten im Spanbrecher- und Schneidkantenbereich, die auch Schneideinsätze nach der US-A-3 792 515 zeigen, können die Spanflächen nur mit einer beschränkten Anzahl von Werkstoffen für Schneideinsätze realisiert werden. Es besteht die Gefahr eines vorzeitigen Standzeitendes durch thermische Belastung, hervorgerufen durch den scharfkantigen Übergang.

Der Erfindung liegt die Aufgabe zugrunde, die Spanfläche des Schneideinsatzes so zu verändern, daß die Kanten im Spanflächenbereich vermieden werden und die durch die Spanfläche beim Bearbeitungsvorgang entstehende thermische Belastung möglichst niedrig gehalten wird.

Die Aufgabe wird durch den im Anspruch 1 beschriebenen Schneideinsatz gelöst. Durch die erfindungsgemäße wellenförmige Ausbildung der Schneidkante wird der entstehende Span wellenförmig verformt. Anschließend berührt dieser wellenförmige Span partiell den wellenförmig ausgebildeten Spanbrecherbereich, wird dort umgelenkt und gebrochen. Der wellenförmige Span erzeugt im Schneidkantenbereich Zonen geringerer und höherer Flächenpressung, wobei durch die Wellenform der Schneidkante und der Spanfläche Belastungsspitzen, wie sie bei Spanflächen mit Kanten auftreten, vermieden werden. Durch die besondere Form der Spanfläche erhält der Span nur begrenzt Kontakt mit ihr. Dadurch wird die thermische Belastung des Schneideinsatzes weiter verringert, so daß sich mit diesem Schneideinsatz auch Stähle höherer Festigkeit optimal zerspanen lassen.

Weiterbildungen der Erfindung sind in den Unteransprüchen beschrieben.

Die wellenförmige Spanfläche beschränkt sich vorteilhafterweise auf einen Streifen entlang der Schneidkante, der an den inneren ebenen Bereich wellenförmig angrenzt, der höher oder tiefer als der Bereich des Eckenradius liegen kann. Es ist aber besonders günstig, wenn dieser ebene Bereich höher liegt als der Bereich im Eckenradius des Schneideinsatzes.

Bei dem erfindungsgemäßen Schneideinsatz kann die wellenförmig ausgeführte Schneidkante in den verschiedenen Bereichen der Welle unterschiedliche - negative und positive - Spanwinkel haben. Außerdem ist es günstig, wenn die Amplitude der wellenförmigen Schneidkante kleiner als ihre halbe Wellenlänge und ihre Wellenlänge 3 bis 12mal größer ist als der Vorschub.

Besonders günstige Ausführungsformen des erfindungsgemäßen Schneideinsatzes werden dadurch erreicht, daß der innere Teil des wellenförmigen Streifens der Spanfläche ansteigt und so als Spanbrecherbereich wirkt, wobei der Abstand des wellenförmigen Streifens der Spanfläche von der Auflagefläche senkrecht zur Schneidkante höchstens ein Minimum hat. Die wellenförmige Spanfläche senkrecht zur Schneidkante hat eine durchschnittliche Streifenbreite, die 8 bis 21mal größer ist als der Vorschub. Der Spanbrecherbereich kann entlang dem wellenförmigen Streifen unterschiedlich steil sein. Die verschiedenen Bereiche der wellenförmig ausgeführten Schneidkante können mit unterschiedlich ausgeführten Spanbrecherbereichen kombiniert werden. Eine besonders günstige Kombination liegt dann vor, wenn im Schneidkantenminimum senkrecht zur Schneidkante der Spanbrecherbereich die größte Steigung hat.

Die wellenförmige Spanfläche kann weiterhin in vorteilhafter Weise so gestaltet sein, daß die Punkte mit Minimalabstand zur Auflagefläche eine Wellenform bilden mit gleicher Wellenlänge wie die der Schneidkante.

Im Bereich des Eckenradius des Schneideinsatzes hat die Spanfläche vorzugsweise keine Wellenform. Der Abstand von der Auflagefläche ist hier konstant und hat vorteilhafterweise Funktionsmaß.

Die Zeichnung zeigt schematisch eine Ausführungsform des Erfindungsgegenstandes. Es zeigen

Fig. 1          eine perspektivische Darstellung der Spanfläche des Schneideinsatzes,

Fig. 2          Spanfläche des Schneideinsatzes mit Höhenlinien,

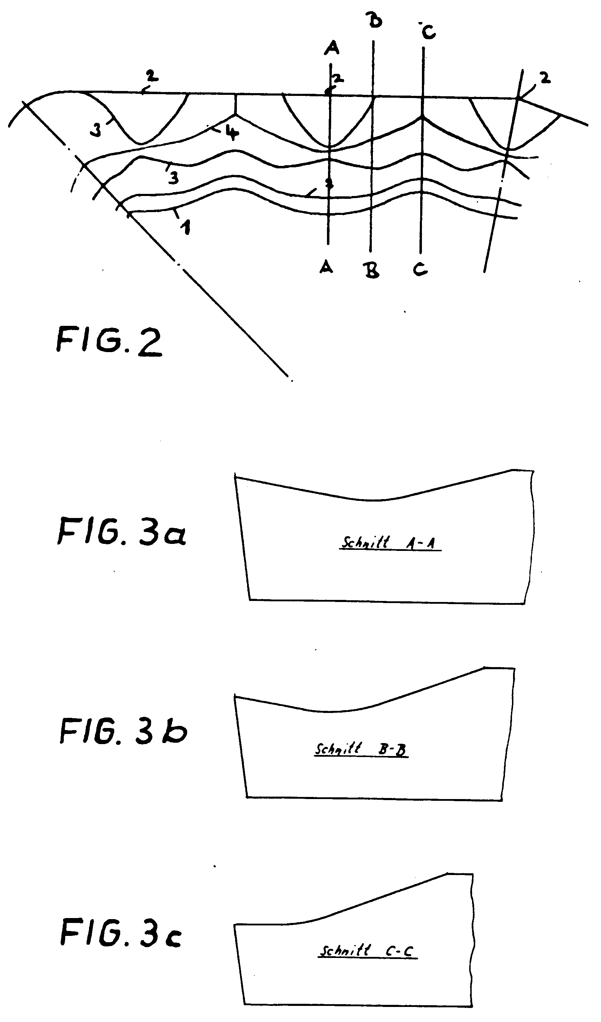

Fig. 3 a, b, c  Querschnitte AA, BB und CC der Spanfläche.

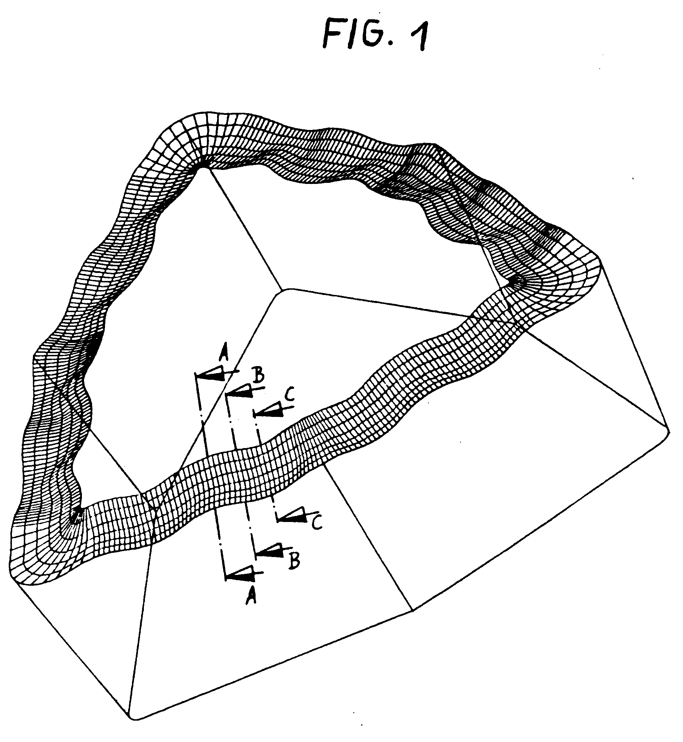

In der perspektivischen Darstellung der Fig. 1 ist deutlich die wellenförmige Schneidkante und die wellenförmige Spanfläche zu erkennen. Die Höhenlinien in Fig. 2 zeigen deutlich, daß die innere Seite 1 des wellenförmigen Streifens der Spanfläche auf dem gleichen Niveau liegt, wellenförmig ist und höher als das Niveau im Bereich des Eckenradius 3 und höher als die höchste Schneidkantenhöhe 2 liegt. Der innere Bereich des wellenförmigen Streifens der Spanfläche ist als Spanbrecherbereich ausgebildet. Die Spanfläche steigt hier an. Der Spanbrecherbereich hat die größte Steigung senkrecht zur Schneidkante dort, wo sich das Wellenminimum der Schneidkante befindet. Auch der benachbarte Spanflächenbereich liegt hier auf Minimalniveau. Im Bereich des Eckenradius 3 ist der Schneideinsatz eben. Es gibt nur ein Minimalniveau 4 im wellenförmigen Streifen der Spanfläche senkrecht zur Schneidkante, das wellenförmig im wellenförmigen Streifen der Spanfläche verläuft.

Der Schnitt AA zeigt einen Querschnitt durch die wellenförmige Spanfläche senkrecht zur Schneidkante im Wellenmaximum der wellenförmigen Schneidkante. An dieser Stelle hat die Schneidkante den positiven Spanwinkel $\gamma = 10°$. Der Schnitt CC liegt parallel zum Schnitt AA im Wellenminimum der Schneidkante. Der Spanwinkel $\gamma'$ beträgt hier nur 0°. Gegenüber dem Schnitt AA beginnt der Spanbrecherbereich im Schnitt CC wesentlich früher und hat eine größere Steigung als im Schnitt AA. Der Schnitt CC weist zwei geradlinige Abschnitte auf, die einen stetigen Übergang haben. Schnitt BB liegt zwischen den Schnitten AA und CC und zeigt der Übergangsbereich. Der Spanwinkel beträgt auch hier noch 10°.

**Patentansprüche**

1.  Schneideinsatz mit einer sowohl in Richtung der Schneidkante (2) als auch im dazu senkrechten sich an die Schneidkante (2) anschließenden Bereich wellenförmiger Spanfläche, wobei die wellenförmige Spanfläche (1, 2, 3) stetige kantenfreie Übergänge hat, und der rückwärtige Teil des wellenförmigen Streifens der Spanfläche als Spanbrecherbereich ausgebildet ist, also ansteigt, **dadurch gekennzeichnet,**

a) daß der Spanwinkel in zu der Schneidkante senkrechter Richtung in verschiedenen Bereichen der Wellenform verschieden ist und im Wellenminimum der Schneidkante die größte Steigung der Spanfläche und im Wellenmaximum einen positiven Spanwinkel hat, und

b) daß der Differenzspanwinkel der wellenförmigen Schneidkante maximal 20° beträgt.

2.  Schneideinsatz nach Anspruch 1, dadurch gekennzeichnet, daß der innere Bereich der Spanfläche eben ist und die innere Begrenzung des wellenförmigen Bereichs wellenförmig verläuft.

3.  Schneideinsatz nach Anspruch 2, dadurch gekennzeichnet, daß der innere ebene Bereich der Spanfläche höher liegt als der Bereich des Eckenradius (1) des Schneideinsatzes.

4.  Schneideinsatz nach Anspruch 3, dadurch gekennzeichnet, daß im Bereich des Eckenradius (1) des Schneideinsatzes die Spanfläche konstant gleichen Abstand von der Auflagefläche hat.

5.  Schneideinsatz nach Anspruch 4, dadurch gekennzeichnet, daß der Abstand von der Auflagefläche im Bereich des Eckenradius (1) des Schneideinsatzes Funktionsmaß hat.

6.  Schneideinsatz nach den Ansprüchen 2 oder 5, dadurch gekennzeichnet, daß der Abstand des wellenförmigen Streifens der Spanfläche von der Auflagefläche senkrecht zur Schneidkante über die ganze Breite höchstens ein Minimum hat.

7.  Schneidkante nach den Ansprüchen 1 bis 6, dadurch gekennzeichnet, daß die Amplitude kleiner ist als die halbe Wellenlänge.

8.  Schneideinsatz nach Anspruch 6, dadurch gekennzeichnet, daß die Punkte im wellenförmigen Streifen der Spanfläche mit Minimalabstand zur Auflagefläche eine Wellenform bilden mit gleicher Wellenlänge wie die Wellenform der Schneidkante.

9.  Schneideinsatz nach den Ansprüchen 1 bis 8, dadurch gekennzeichnet, daß die Wellenlänge der wellenförmigen Schneidkante 3 bis 12mal größer ist als der Vorschub.

**10.** Schneideinsatz nach den Ansprüchen 1 bis 9, dadurch gekennzeichnet, daß die wellenförmige Spanfläche senkrecht zur Schneidkante eine durchschnittliche Streifenbreite hat, die 8 bis 21mal größer ist als der Vorschub.

**Claims**

**1.** A cutting insert having an undulatory chip face both in the direction of the cutting edge (2) and also in the zone adjoining the cutting edge (2) and perpendicular thereto, wherein the undulatory chip face (1, 2, 3) has continuous edge-free transitions and the rear portion of the undulatory strip of the chip face being constructed as a chip breaker zone - i.e., rises, characterized in that the chip angle in the direction perpendicular to the cutting edge is different in different zones of the undulation, having the maximum pitch of the chip face at the minimum of the undulation of the cutting edge and a positive chip angle at the maximum of the undulation, the differential chip angle of the undulatory cutting edge being 20° at the most.

**2.** A cutting insert according to claim 1, characterized in that the inner zone of the chip face is flat and the inner boundary of the undulatory zone extends in an undulation.

**3.** A cutting insert according to claim 2, characterized in that the inner flat zone of the chip surface is higher than the zone of the radius of curvature (1) of the corner of the cutting insert.

**4.** A cutting insert according to claim 3, characterized in that in the zone of the radius of curvature (1) of the corner of the cutting insert the chip face is at a constant equal distance from the bearing face.

**5.** A cutting insert according to claim 4, characterized in that the distance from the bearing face has a functional dimension in the zone of the radius of curvature (1) of the corner of the cutting insert.

**6.** A cutting insert according to claims 2 or 5, characterized in that the distance of the undulatory strip of the chip face from the bearing face has perpendicularly to the cutting edge at most a minimum over the whole width.

**7.** A cutting insert according to claims 1 to 6, characterized in that the amplitude is smaller than half the length of the undulation.

**8.** A cutting insert according to claim 6, characterized in that the points in the undulatory strip of the chip face at a minimum distance from the bearing face form an undulatory shape having the same length of undulation as the undulatory shape of the cutting edge.

**9.** A cutting insert according to claims 1 to 8, characterized in that the length of the undulation of the undulatory cutting edge is 3 to 12 times greater than the feed.

**10.** A cutting insert according to claims 1 to 9, characterized in that the undulatory chip face has perpendicularly to the cutting edge an average strip width which is 8 to 21 times greater than the feed.

**Revendications**

**1.** Insert de coupe comportant une planche ondulée, aussi bien dans la direction de l'arête de coupe (2) que dans la zone qui se raccorde à l'arête de coupe (2), perpendiculairement à elle, étant entendu que la planche ondulée (1, 2, 3) présente des transitions continues sans arêtes et que la partie arrière de la bande ondulée de la planche est réalisée sous la forme d'une zone brise-copeaux, donc a une pente montante,
caractérisé en ce que
a) l'angle de coupe dans la direction orthogonale à l'arête de coupe est différent dans différentes zones de l'ondulation, et présente, au minimum de l'onde de l'arête de coupe, la plus forte pente de la planche et, au maximum de l'onde, un angle de coupe positif,
b) l'angle de coupe différentiel de l'arête de coupe ondulée a une valeur maximale de 20°.

**2.** Insert de coupe suivant la revendication 1, caractérisé en ce que la zone intérieure de la planche est plane et la limite intérieure de la zone ondulée a une forme ondulée.

**3.** Insert de coupe suivant la revendication 2, caractérisé en ce que la zone intérieure plane de la planche se trouve plus haut que la zone du rayon de coin (1) de l'insert de coupe.

**4.** Insert de coupe suivant la revendication 3, caractérisé en ce que, dans la zone du rayon de coin (1) de l'insert de coupe, la planche est constamment à la même distance de la surface d'appui.

**5.** Insert de coupe suivant la revendication 4, caractérisé en ce que la distance de la surface d'appui, dans la zone du rayon de coin (1) de l'insert de coupe, a une valeur fonctionnelle.

**6.** Insert de coupe suivant la revendication 2 ou la revendication 5, caractérisé en ce que la distance de la bande ondulée de la planche depuis la surface d'appui, perpendiculairement à l'arête de coupe, a, au plus, un minimum sur toute la largeur.

**7.** Insert de coupe suivant l'une quelconque des revendications 1 à 6, caractérisé en ce que l'amplitude est plus petite que la demi-longueur d'onde.

**8.** Insert de coupe suivant la revendication 6, caractérisé en ce que les points dans la bande ondulée de la planche à une distance minimale de la surface d'appui forment une ondulation présentant la même longueur d'onde que l'ondulation de l'arête de coupe.

**9.** Insert de coupe suivant l'une quelconque des revendications 1 à 8, caractérisé en ce que la longueur d'onde de l'arête de coupe ondulée est 3 à 12 fois plus grande que l'avancement.

**10.** Insert de coupe suivant l'une quelconque des revendications 1 à 9, caractérisé en ce que la planche ondulée, perpendiculairement à l'arête de coupe, a une largeur de bande moyenne qui est 8 à 21 fois plus grande que l'avancement.

# FIG. 1

**FIG. 2**

**FIG. 3a** — Schnitt A-A

**FIG. 3b** — Schnitt B-B

**FIG. 3c** — Schnitt C-C